# FASCICULE DE BREVET EUROPEEN

(11) **EP 4 607 944 B1**
(45) Date de publication et mention de la délivrance du brevet: **28.10.2026**
(21) Numéro de dépôt: 25188545.5
(22) Date de dépôt: 13.09.2022
(51) Int. Cl.: G06T 3/4015, H04N 23/84

(54) **PROCÉDÉ DE TRAITEMENT, AU SEIN D'UNE CHAINE DE TRAITEMENT D'IMAGE, D'UNE MATRICE DE PIXELS ET DISPOSITIF ÉLECTRONIQUE CORRESPONDANT**
VERFAHREN ZUR VERARBEITUNG EINER PIXELMATRIX IN EINER BILDVERARBEITUNGSLEITUNG UND ELEKTRONISCHE VORRICHTUNG DAFÜR
METHOD FOR PROCESSING, IN AN IMAGE PROCESSING CHAIN, AN ARRAY OF PIXELS AND CORRESPONDING ELECTRONIC DEVICE

(30) Priorité: 27.09.2021 FR 2110166
(43) Date de publication de la demande: 27.08.2025
(62) Numéro(s) de document de la (des) demande(s) initiale(s) en application de l'article 76 CBE: 22195278.1 / 4 156 080
(73) Titulaire: STMicroelectronics France, 92120 Montrouge (FR)
(72) Inventeur: PERRIN, Pol, 75020 PARIS (FR)
(74) Mandataire: Casalonga

(56) Documents cités:
- US-A- 6 091 851
- US-A1- 2017 111 566
- US-A1- 2019 141 268
- US-A1- 2021 185 285

## Description

Des modes de mise en œuvre et de réalisation concernent les traitements d'images, et en particulier les traitements de matrices de pixels rouges verts bleus et infrarouges « RGB-IR » (acronyme des termes anglais usuel « Red Green Blue Infrared »).

Les matrices de pixels « RGB-IR » sont usuellement issues d'un imageur utilisé dans un système de « vision machine », exploitant à la fois l'information du visible et des informations de l'infrarouge. En effet, dans un cadre de vision machine, l'infrarouge peut permettre de traiter différemment des informations d'une scène, notamment au moyen de technique d'illumination active utilisant un émetteur infrarouge pour par exemple effectuer un suivi du regard d'un conducteur de véhicule dans des conditions à très faible luminosité (dans le visible) ou éventuellement effectuer une mesure de temps de vol.

Des technologies d'imageurs « RGB-IR » sont munies de matrices comportant un motif entrelacé de pixels photosensibles dédiés aux composantes visibles de la lumière et de pixels photosensibles dédiés à une composante infrarouge de la lumière. Les pixels photosensibles génèrent un signal électrique représentatif de la quantité de lumière, indistinctement de sa longueur d'onde, reçue pendant une phase d'acquisition. Les composantes des pixels photosensibles sont classiquement définies par des filtres optiques respectivement bleu, vert, rouge et à bande passante infrarouge en regard des pixels photosensibles correspondants. En outre, un module optique au-dessus de la matrice de pixels, intègre typiquement un filtre double-bande avec une fine bande spectrale dans l'infrarouge précisant la sensibilité sur la longueur d'onde de la source active, et une bande spectrale dans le visible. En conséquence, les pixels dédiés à l'infrarouge reçoivent bien le signal provenant de la source active, mais les pixels dédiés aux composantes du visible aussi, et sont donc en partie pollués par cette quantité d'infrarouge.

Ce type d'imageur RGB-IR est avantageux notamment en matière d'encombrement, mais la présence et la répartition spatiale particulière des pixels photosensibles infrarouges parmi les pixels photosensibles rouges, verts, bleus présentent des difficultés en matière de traitement d'image en aval de l'acquisition du signal optique.

En effet, d'une part la bande de longueurs d'onde infrarouge n'est typiquement pas filtrée pour les pixels photosensibles du visible, générant en conséquence des signaux dégradés par un bruit infrarouge. D'autre part, la résolution dans le visible est amoindrie en raison de la présence des pixels photosensibles dédiés à l'infrarouge. En outre, le format de ce type de matrice RGB-IR n'est typiquement pas adapté aux traitements d'images conventionnels, ces derniers étant classiquement prévus pour des matrices au format classique et connu en soi « de Bayer ».

Ainsi, dans ce type de matrice RGB-IR, des algorithmes de traitements de dépollution infrarouge, de remplacement de composantes infrarouges par des composantes du visible, et de formatages au format de Bayer, sont typiquement prévus en début de chaine de traitement d'image. Ces différents traitements comprennent classiquement des techniques d'interpolations bilinéaires, c'est-à-dire sommairement une reconstruction d'une information manquante (c'est-à-dire respectivement, les composantes de bruits infrarouges, les composantes du visible en remplacement des composantes infrarouges, et les composantes du visibles de reconstruction du format de Bayer) faite par moyenne arithmétique des informations correspondantes issues de pixels voisins.

La demande de brevet US 2021/0185285 divulgue un capteur RGB-IR et un procédé de reconstruction des composantes RGB manquantes. Le procédé inclut la dépollution du bruit IR dans chaque pixel R, G ou B par interpolation et soustraction dudit bruit. La reconstruction prend en compte l'uniformité spatiale dans les poids d'interpolation de R, G et B.

Le brevet US 6,091,581 divulgue un capteur RGB à motif de Bayer, et un procédé de reconstruction des composantes RGB manquantes . Pour interpoler B manquant en un pixel R, le procédé sélectionne le B dont le voisinage de pixels G a la médiane la plus proche de son propre voisinage de pixels G. De même pour interpoler R manquant sur un pixel B.

Cela étant, les traitements d'interpolation bilinéaires appliquée aux matrices du type RGB-IR manquent de performance en matière de qualité d'image finale, car ces traitements classiques font apparaitre des artefacts structurels et de couleur, en particulier au niveau des zones de transitions fortes entre pixels (c'est-à-dire par exemple des zones à fort contraste), dégradant la qualité de l'image obtenue,

Il existe donc un besoin de proposer des techniques de traitement de matrice de pixels du type « RGB-IR » améliorant la qualité de l'image traitée, notamment dans le cadre d'un traitement de dépollution de l'infrarouge dans les composantes du visibles, de reconstruction de composantes manquantes de pixels, et de formatage en matrice de Bayer.

Des modes de réalisation et de mise en œuvre définis ci-après proposent une technique d'interpolation adaptée à ces trois types de traitements, dans laquelle les variations de textures et de bords dans l'image sont prises en compte afin d'ajuster un poids attribué aux composantes de pixels voisins. L'attribution du poids est faite de telle sorte que les poids les plus forts sont donnés aux pixels situés dans les zones les plus « plates » ou les « moins texturées » c'est-à-dire les plus uniformes. Cela permet d'affiner la qualité de l'image et conduit à une reproduction plus fidèle.

Selon un aspect il est ainsi proposé un procédé de traitement, au sein d'une chaine de traitement d'image destinée à être connectée à un imageur, d'une matrice de pixels contenant chacun une composante originelle rouge, verte, bleue, ou infrarouge, comme à la revendication 1. Le procédé comprend comprenant au moins une interpolation d'une composante interpolée différente de la composante originelle d'un pixel d'intérêt à partir des composantes d'un groupe de pixels voisins du pixel d'intérêt, l'interpolation comprenant :
- un calcul de la somme des composantes de pixels de références pondérées par un poids respectivement attribué, les pixels de référence étant des pixels du groupe ayant la même composante originelle que la composante interpolée,
- une évaluation d'une uniformité spatiale d'un environnement, au sein du groupe, de chaque pixel de référence,
- un calcul des poids attribués aux pixels de référence à des valeurs normalisées et proportionnelles à l'uniformité spatiale respective.

Dans le cadre du traitement d'image, le sens du terme « pixel » correspond à une position donnée dans la matrice de données numériques résultant d'une acquisition d'image, chaque pixel contenant une unique donnée numérique, appelée composante, représentative de l'intensité de la composante rouge, verte, bleue ou infrarouge respective dans l'image à la position de ce pixel.

On entend le terme « proportionnelles » au sens large, c'est-à-dire que la valeur du poids attribué varie dans le même sens que l'uniformité évaluée, et non au sens strict d'un rapport constant entre ces grandeurs. Ainsi, les valeurs des poids augmentent lorsque l'uniformité augmente, et diminue lorsque l'uniformité diminue, de manière à attribuer un poids de grande valeur à la composante d'un pixel situé dans un environnement de grande uniformité, et inversement un poids de moindre valeur à la composante d'un pixel situé dans un environnement de moindre uniformité.

Ainsi, dans le procédé selon cet aspect, les variations de textures et de bords sont prises en compte dans le calcul de la composante interpolée de manière à amplifier l'influence des composantes des pixels de références les plus représentatives de l'environnement du pixel d'intérêt, et corollairement de manière à restreindre l'influence des composantes des pixels de référence appartenant à des zones de transition dans l'image, moins représentatives de l'environnement du pixel d'intérêt.

Selon un mode de mise en œuvre, l'évaluation de l'uniformité spatiale de chaque pixel de référence comprend un calcul de gradients sur les composantes des pixels ayant la composante originelle verte adjacents aux pixels de références respectifs.

Par exemple, le calcul des gradients comprend une mesure de la différence absolue entre la plus grande valeur et la plus petite valeur des composantes desdits pixels ayant la composante originelle verte adjacents auxdits pixels de référence.

En effet, le calcul de gradients fournit par définition une information sur la variation spatiale des éléments calculés, et en conséquence par l'inverse, sur l'uniformité spatiale. L'utilisation des « pixels verts » (i.e. les pixels ayant la composante originelle verte) adjacents aux pixels de références est avantageuse étant donné que les pixels verts sont usuellement plus nombreux dans la matrice, et peuvent ainsi fournir une information de l'environnement le plus proche du pixel de référence. En effet, les pixels verts sont typiquement présents avec une plus grande densité dans le cas des matrices RGBIR car le canal vert est le plus représentatif des variations d'intensité lumineuse perçues par l'œil humain.

Selon un mode de mise en œuvre, l'évaluation de l'uniformité spatiale comprend une identification d'une orientation de variation spatiale à partir d'une comparaison des composantes des pixels de références, et une sélection desdits pixels ayant la composante originelle verte utilisés pour le calcul des gradients, dans l'orientation identifiée.

Ce mode de réalisation, particulièrement mais non-exclusivement adapté à un traitement de dépollution de bruit infrarouge, correspond à effectuer une première approximation de l'uniformité à partir des composantes des pixels de références, afin de restreindre la quantité de pixels verts adjacents aux pixels de références utilisés dans le calcul des gradients.

Selon un mode de mise en œuvre, le groupe de pixels voisins du pixel d'intérêt comprend un ensemble de pixels appartenant à un carré de pixels ayant un nombre impair de pixels sur chaque côté, par exemple cinq pixels, le pixel d'intérêt étant situé au centre du carré.

Selon un mode de mise en œuvre, une matrice de pixels est délivrée à la chaine de traitement par l'imageur selon un motif élémentaire du type « RGB-IR 4x4 » comportant deux pixels rouges (c'est-à-dire des pixels ayant la composante originelle rouge), huit pixels verts (c'est-à-dire des pixels ayant la composante originelle verte), deux pixels bleus(c'est-à-dire des pixels ayant la composante originelle bleue), et quatre pixels infrarouges (c'est-à-dire des pixels ayant la composante originelle infrarouge), agencés de sorte que chaque pixel rouge, bleu et infrarouge ne soit adjacent qu'à des pixels verts.

Selon un mode de mise en œuvre, ladite interpolation est mise en œuvre dans un traitement de dépollution d'un bruit infrarouge des pixels, la composante interpolée étant la composante infrarouge, les pixels d'intérêt ayant les composantes originelles rouge, verte, et bleue.

Selon un mode de mise en œuvre, ladite interpolation est mise en œuvre dans un traitement de reconstruction d'une composante du visible à la place d'une composante infrarouge, les composantes interpolées étant les composantes rouge et bleue, les pixels d'intérêt ayant la composante originelles infrarouge.

Selon un mode de mise en œuvre, ladite interpolation est mise en œuvre dans un traitement de formatage de la matrice de pixel en une matrice de Bayer, les composantes interpolées étant respectivement soit rouge soit bleue, les pixels d'intérêt ayant une composante originelle respectivement soit bleue soit rouge.

Selon un autre aspect, il est proposé un dispositif électronique comportant une chaine de traitement d'image destinée à être connectée à un imageur, et configurée pour effectuer un traitement sur une matrice de pixels contenant chacun une composante originelle rouge, verte, bleue, ou infrarouge comme à la revendication 6.

Le traitement comprend au moins une interpolation d'une composante interpolée différente de la composante originelle d'un pixel d'intérêt à partir des composantes d'un groupe de pixels voisins du pixel d'intérêt, dans lequel pour mettre en œuvre l'interpolation, la chaine de traitement est configurée pour :
- calculer la somme des composantes de pixels de références pondérées par un poids respectivement attribué, les pixels de référence étant des pixels du groupe ayant la même composante originelle que la composante interpolée,
- évaluer une uniformité spatiale d'un environnement, au sein du groupe, de chaque pixel de référence,
- calculer les poids attribués aux pixels de référence à des valeurs normalisées et proportionnelles à l'uniformité spatiale respective.

Selon un mode de réalisation, pour évaluer l'uniformité spatiale de chaque pixel de référence, la chaine de traitement est configurée pour calculer des gradients sur les composantes des pixels ayant la composante originelle verte adjacents au pixel de référence respectif.

Par exemple, la chaine de traitement est configurée pour calculer les gradients en mesurant la différence absolue entre la plus grande valeur et la plus petite valeur des composantes desdits pixels ayant la composante originelle verte adjacents auxdits pixels de référence.

Selon un mode de réalisation, pour évaluer l'uniformité spatiale de chaque pixel de référence, la chaine de traitement est configurée pour comparer des composantes des pixels de références et identifier une orientation de variation spatiale à partir de la comparaison, et pour sélectionner lesdits pixels ayant la composante originelle verte utilisés pour le calcul des gradients, dans l'orientation identifiée.

Selon un mode de réalisation, le groupe de pixels voisins du pixel d'intérêt comprend un ensemble de pixels appartenant à un carré de pixels ayant un nombre impair de pixels sur chaque côté, le pixel d'intérêt étant situé au centre du carré.

Selon un mode de réalisation, la chaine de traitement est configurée pour traiter une matrice de pixels selon un motif élémentaire du type « RGB-IR 4x4 » comportant deux pixels rouges, huit pixels verts, deux pixels bleus, et quatre pixels infrarouges, agencés de sorte que chaque pixel rouge, bleu et infrarouge ne soit adjacent qu'à des pixels verts.

Selon un mode de réalisation, la chaine de traitement comporte un moyen de traitement de dépollution d'un bruit infrarouge des pixels configuré pour mettre en œuvre ladite interpolation de sorte que la composante interpolée est la composante infrarouge, et les pixels d'intérêt ont les composantes originelles rouge, verte, et bleue.

Selon un mode de réalisation, la chaine de traitement comporte un moyen de traitement de reconstruction d'une composante du visible à la place d'une composante infrarouge, configuré pour mettre en œuvre ladite interpolation de sorte que les composantes interpolées sont les composantes rouge et bleue, et les pixels d'intérêt ont la composante originelle infrarouge.

Selon un mode de réalisation, la chaine de traitement comporte un moyen de traitement de traitement de formatage de la matrice de pixel en une matrice de Bayer, configuré pour mettre en œuvre ladite interpolation de sorte que les composantes interpolées sont respectivement soit rouge soit bleue, et les pixels d'intérêt ont une composante originelle respectivement soit bleue soit rouge.

D'autres avantages et caractéristiques apparaîtront à l'examen de la description détaillée de modes de réalisation et de mise en œuvre, nullement limitatifs, et des dessins annexés sur lesquels :
[Fig 1] ;
[Fig 2] ;
[Fig 3] ;
[Fig 4] ;
[Fig 5] ;

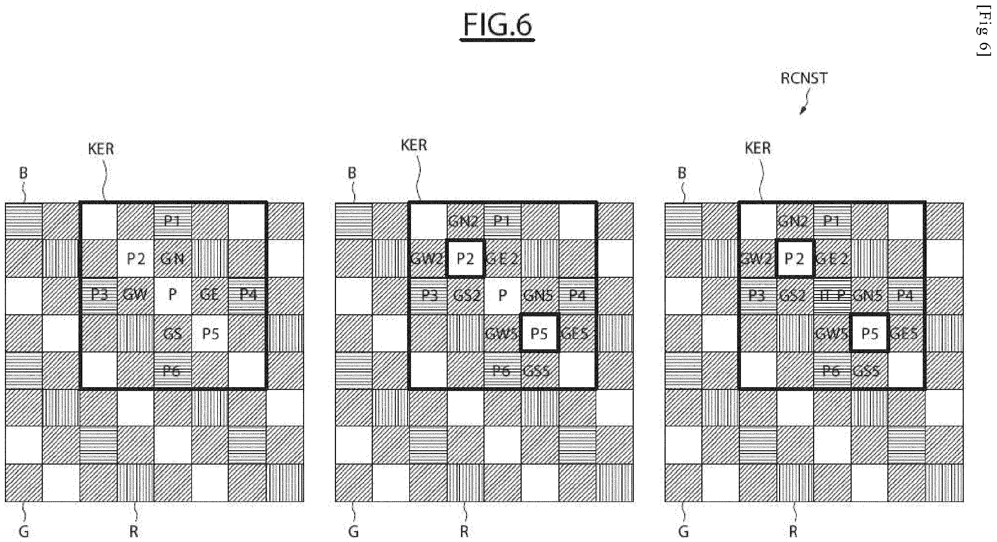

[Fig 6] illustrent des modes de réalisation et de mise en œuvre de l'invention.

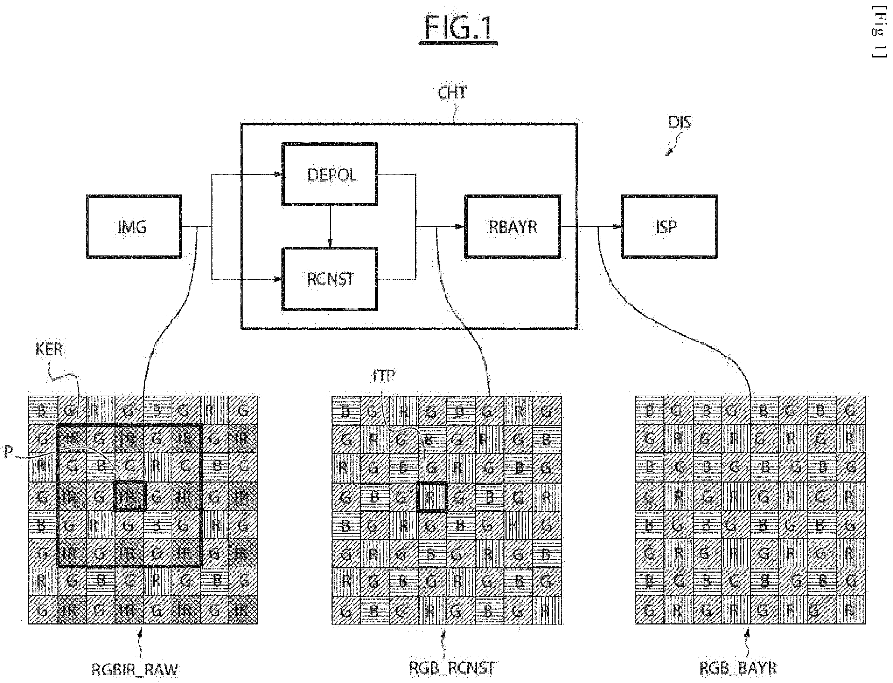

La figure 1 illustre un dispositif électronique DIS comportant une chaine de traitement d'image CHT. Une entrée de la chaine de traitement d'image CHT est destinée à être connectée à un imageur IMG, et une sortie de la chaine de traitement d'image CHT est destinée à être connectée à une unité de traitement de signaux d'image ISP.

L'imageur IMG et/ou l'unité de traitement de signaux d'image ISP peuvent appartenir au dispositif DIS dans une variante complétement intégrée, ou non. L'imageur IMG comporte une matrice de « pixels » photosensibles, dans une configuration du type RGB-IR, comportant un motif entrelacé de pixels photosensibles dédiés aux composantes visibles de la lumière et de pixels photosensibles dédiés à une composante infrarouge de la lumière.

Les pixels photosensibles génèrent un signal électrique représentatif de la quantité de lumière, indistinctement de sa longueur d'onde, reçue pendant une phase d'acquisition. Les composantes des pixels photosensibles sont classiquement définies par des filtres optiques respectivement bleu, vert, rouge et infrarouge en regard des pixels photosensibles correspondants. En outre, un module optique, au-dessus de la matrice de pixels, intègre typiquement un filtre double-bande avec une fine bande spectrale dans l'infrarouge précisant la sensibilité sur les longueurs d'ondes infrarouges, et une bande spectrale dans le visible. En conséquence, les pixels dédiés à l'infrarouge reçoivent bien un signal infrarouge, mais les pixels dédiés aux composantes du visible aussi, et sont donc en partie pollués par cette quantité d'infrarouge.

Les signaux générés par les pixels photosensibles de l'imageur IMG sont communiqués à la chaine de traitement CHT sous la forme d'une matrice de données numériques « brutes » RGBIR_RAW, également appelées « pixels de données » ou simplement « pixels ».

Dans la suite, qui concerne le traitement de matrice de données numériques d'image, le sens du terme « pixel » correspond à une position d'une donnée dans la matrice de données numériques, cette position étant typiquement identique à la position du pixel photosensible correspondant dans la matrice photosensible de l'imageur IMG.

En outre, on considère que chaque pixel contient une unique donnée numérique, appelée composante, représentative de l'intensité de la composante rouge, verte, bleue ou infrarouge respective dans l'image à la position de ce pixel.

Dans cet exemple, la matrice de données numériques « brutes » RGBIR_RAW est du type RGB-IR 4x4, c'est-à-dire qu'un motif élémentaire de la matrice (i.e. le plus petit élément pouvant être répété pour composer la matrice) comporte, dans un carré de seize pixels, deux pixels rouges R, huit pixels verts G, deux pixels bleus B, et quatre pixels infrarouges IR, agencés de sorte que chaque pixel rouge R, bleu B et infrarouge IR ne soit adjacent qu'à des pixels verts G, et typiquement de sorte que les pixels rouge R, bleu B et infrarouge IR soient sensiblement équitablement répartis dans le motif élémentaire.

La chaine de traitement CHT comporte un moyen de traitement de dépollution DEPOL d'un bruit infrarouge des pixels configuré pour interpoler une composante de bruit infrarouge dans les pixels rouges R, verts G, et bleus B de la matrice de données brutes RGBIR_RAW. Le moyen de traitement de dépollution DEPOL est ainsi capable de soustraire la composante de bruit infrarouge à l'information contenu dans chaque pixel du visible R, G, B, et de fournir les composantes correspondantes « dépolluées » en aval de la chaine de traitement CHT, notamment à un moyen de traitement de reconstruction RCNST et à un moyen de traitement de formatage RBAYR.

La chaine de traitement CHT comporte en outre un moyen de traitement de reconstruction RCNST d'une composante du visible à la place d'une composante infrarouge, configuré pour interpoler une composante rouge R ou bleue B reconstituée, à la position des pixels infrarouge IR de la matrice de données brutes RGBIR_RAW. Le moyen de traitement de reconstruction RCNST est ainsi capable de fournir une matrice reconstruite RGB_RCNST du type RGB non-Bayer, ne contenant que des composantes du visible R, G, B, mais dans un format qui n'est pas le format de Bayer. Par exemple, la matrice RGB_RCNST du type RGB non-Bayer comporte un motif élémentaire dans un carré de seize pixels.

En pratique, le moyen de traitement de dépollution DEPOL et le moyen de traitement de reconstruction RCNST peuvent être mutualisés de sorte que leurs fonctions respectives sont mises en œuvre d'une manière « entrelacée » et concomitante, par exemple dans le cadre d'un algorithme de calculs en lecture unique d'entrées (usuellement désigné « single pass algorithm » en anglais).

Dans ce cas, lors d'une première phase de la chaine de traitement CHT, le traitement de dépollution DEPOL d'un bruit infrarouge des pixels du visible R, G, B, et simultanément, le traitement de reconstruction RCNST d'une composante du visible à la place d'une composante infrarouge, utilisent les informations obtenues en parcourant la matrice de données numériques « brutes » RGBIR_RAW ligne par ligne, et effectuent le traitement pixel par pixel. L'image d'entrée RGBIR_RAW est parcourue qu'une seule fois d'où les termes « single pass ».

Sommairement, de la manière plus amplement décrite ci-après en relation avec la figure 1, ainsi que d'une part avec les figures 2 à 4 et d'autre part avec la figure 5, lorsqu'on parcourt la matrice de données numériques « brutes » RGBIR_RAW, en fonction de la composante originelle du pixel traité :
- Si le pixel traité a la composante originelle infrarouge IR, on effectue « à la volée » le traitement de dépollution des deux pixels de références rouges R (ou bleus B), et on effectue ensuite le calcul d'interpolation à partir des pixels de référence dépollués. Les pixels de référence dépollués sont alors stockés dans l'image de sortie, remplaçant la valeur polluée initiale.
- Si le pixel d'intérêt a la composante originelle verte G, le traitement de dépollution est exécuté.
- Si le pixel d'intérêt a la composante originelle rouge R ou bleue B, alors : soit le pixel a déjà été dépollué, soit il n'a pas déjà été dépollué (lorsque le pixel d'intérêt ne correspond à aucune diagonale d'un pixel infrarouge, c'est-à-dire qu'il est dans un angle), et dans ce cas, le traitement de dépollution est exécuté.

La chaine de traitement CHT comporte enfin un moyen de traitement de formatage RBAYR en une matrice de Bayer RGB_BAYR, configuré pour interpoler, dans la matrice reconstruite RGB_RCNST, des composantes rouges R reconstituées à la place de composantes bleues B et des composantes bleues B reconstituées à la place de composantes rouges R, de manière à fournir une matrice traitée au format de Bayer RGB_BAYR.

Le format de Bayer comporte un motif élémentaire dans un carré de quatre pixels, contenant un pixel rouge R et un pixel bleu B dans une diagonale, et deux pixels verts G dans l'autre diagonale.

La matrice traitée RGB_BAYR, peut ensuite être « manipulée » par une unité de traitement de signaux d'image ISP classique, et notamment adaptée pour des matrices au format de Bayer.

Chaque moyen de traitement DEPOL, RCNST, RBAYR est ainsi configuré pour mettre en œuvre, en particulier, une interpolation d'une composante, appelée composante interpolée.

Les composantes des pixels des matrices de données transmises sur les entrées de chacun des moyens de traitement et traitée par chacun des moyens de traitement, sont appelées composantes originelles.

Le pixel sur lequel est calculé la composante interpolée est appelé pixel d'intérêt P. Le pixel d'intérêt, dans la matrice résultante du traitement est appelé pixel interpolé ITP.

Les références ci-après sont représentées en relation avec le traitement de reconstruction d'une composante du visible à la place d'une composante infrarouge RCNST, exécuté sur la matrice de données numériques brutes RGBIR_RAW, pour des raisons de clarté. Cela étant, la méthode d'interpolation est décrite ci-après pour le cas général, s'appliquant aussi bien dans le traitement de dépollution DEPOL sur la matrice de données brutes RGBIR_RAW, dans le traitement de reconstruction RCNST sur la matrice de données brutes RGBIR_RAW et en collaboration avec au moins certains pixels issus du traitement de dépollution DEPOL, et dans le traitement de formatage RBAYR sur la matrice reconstruite et dépolluée RGB_RCNST.

Ainsi, pour un pixel d'intérêt P d'une matrice traitée RGBIR_RAW, RGB_RCNST, c'est-à-dire l'emplacement d'une donnée dans la matrice, la composante originelle (dans cet exemple, infrarouge) IR est l'information connue en entrée du traitement, contenue par ce pixel P ou par des pixels voisins KER au pixel d'intérêt P ; tandis que la composante interpolée ITP est une information, à la position du pixel d'intérêt P dans la matrice, inconnue avant le traitement et « reconstruite » ou « reconstituée » par des calculs exécutés par les moyens de traitement respectifs DEPOL, RCNST, RBAYR.

L'interpolation mise en œuvre par chaque moyen de traitement DEPOL, RCNST, RBAYR, utilise les informations connues des composantes originelles des pixels de la matrice, en particulier les pixels voisins KER du pixel d'intérêt P, en leur attribuant un poids respectif. Le poids est classiquement un coefficient de répartition de l'influence dans le calcul de chaque valeur pondérée, par rapport aux autres.

Dans l'interpolation mise en œuvre par les moyens de traitement DEPOL, RCNST, RBAYR, l'attribution des poids est ajustée en tenant compte des variations de textures et de bords dans l'image, de sorte que les poids les plus forts sont donnés aux pixels situés dans les zones les plus « plates » c'est-à-dire les plus uniformes, ou « les moins texturées ».

A cet égard, l'interpolation d'une composante interpolée ITP, différente de la composante originelle d'un pixel d'intérêt P est faite à partir des composantes d'un groupe de pixels voisins KER du pixel d'intérêt P, appelée noyau ou noyau de pixels KER.

Par exemple, le groupe de pixels voisins du pixel d'intérêt P, i.e. le noyau KER, comprend un ensemble de pixels appartenant à un carré de pixels ayant un nombre impair de pixels (par exemple, cinq) sur chaque côté, le pixel d'intérêt P étant situé au centre du carré KER.

Ainsi, l'interpolation comprend un calcul de la somme des composantes de pixels de références pondérées par un poids respectivement attribué, les pixels de référence étant les pixels du noyau KER ayant la même composante originelle (dans cet exemple, rouge) R que la composante interpolée R du pixel ITP qui en résulte dans la matrice traitée RGB_RCSNT.

Pour obtenir les poids, l'interpolation comprend une évaluation d'une uniformité spatiale d'un environnement, au sein du noyau KER, de chaque pixel de référence (dans cet exemple les pixels ayant la composante rouge dans le noyau KER) R, et un calcul des poids attribués aux pixels de référence R à des valeurs normalisées et proportionnelles à l'uniformité spatiale respective.

L'évaluation de l'uniformité spatiale des pixels de référence R comprend avantageusement un calcul de gradients sur les composantes des pixels ayant la composante originelle verte G adjacents aux pixels de référence respectifs R. Par exemple, le calcul des gradients peut être obtenu par une mesure de la différence absolue entre la plus grande valeur et la plus petite valeur des composantes desdits pixels verts G adjacents auxdits pixels de référence R.

Dans le cadre d'une mise en œuvre des traitements de dépollution DEPOL et de reconstruction RCNST « en lecture unique », i.e. « single pass », les pixels ayant la composante originelle verte G sont issus de la matrice de données brutes RGBIR_RAW et n'ont pas encore reçu le traitement de dépollution DEPOL, au moment de la mise en œuvre du calcul des gradients mentionné ci-dessus. Cela ne pose pas de problème en pratique car il est fait l'hypothèse que les composantes vertes G et les composantes de bruit infrarouge sur ces pixels sont corrélées, c'est-à-dire que les composantes de bruit infrarouge sont globalement uniformes dans les zones où les composantes vertes G sont globalement uniformes, et que les composantes de bruit infrarouge présentent des variations dans les zones où les composantes vertes G présentent des variations. En conséquence, la présence de la composante de bruit infrarouge dans les données prises en compte dans le calcul des gradients n'a pas ou peu d'impact dans la décision finale de pondération.

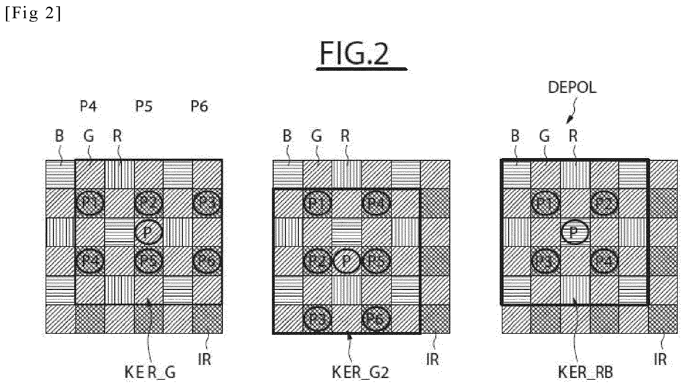

On se réfère désormais aux figures 2 à 6 pour détailler différents cas d'évaluation de l'uniformité spatiale de l'environnement des pixels de référence, ainsi que les calculs des poids et de la composante interpolée des cas respectifs.

Les figures 2 à 4, correspondent avantageusement au traitement de dépollution DEPOL, dans lequel ladite interpolation est mise en œuvre de sorte que la composante interpolée est la composante infrarouge IR (composante de bruit infrarouge), et les pixels d'intérêt P ont les composantes originelles rouge R, verte G, et bleue B. En conséquence, les pixels de référence ont la composante originelle infrarouge IR.

La figure 2 illustre les différents cas possibles de noyau KER, et de pixels de références respectifs P1-P6, P1-P4, pour deux positions de pixels d'intérêt P ayant la composante originelle verte KER_G, KER_G2, et pour la position de pixels d'intérêt P ayant la composante originelle rouge ou bleu KER_RB.

Ainsi, pour les pixels d'intérêt P de composante originelle verte G, les noyaux KER_G, KER_G2 comportent six pixels de référence P1, P2, P3, P4, P5, P6, répartis soit en deux lignes et trois colonnes KER_G, soit en trois lignes et deux colonnes KER_G2, constituant deux cas parfaitement équivalent par rotation d'un quart de tour.

Pour les pixels d'intérêt P de composante originelle rouge R ou bleue B, le noyau KER_RB comporte quatre pixels de référence P1, P2, P3, P4, situés aux diagonales du pixels d'intérêt P. Le cas illustré correspond à un pixel d'intérêt P de composante originelle bleue B, mais la répartition des pixels de référence P1, P2, P3, P4 est strictement identique pour un pixel d'intérêt P de composante originelle rouge R.

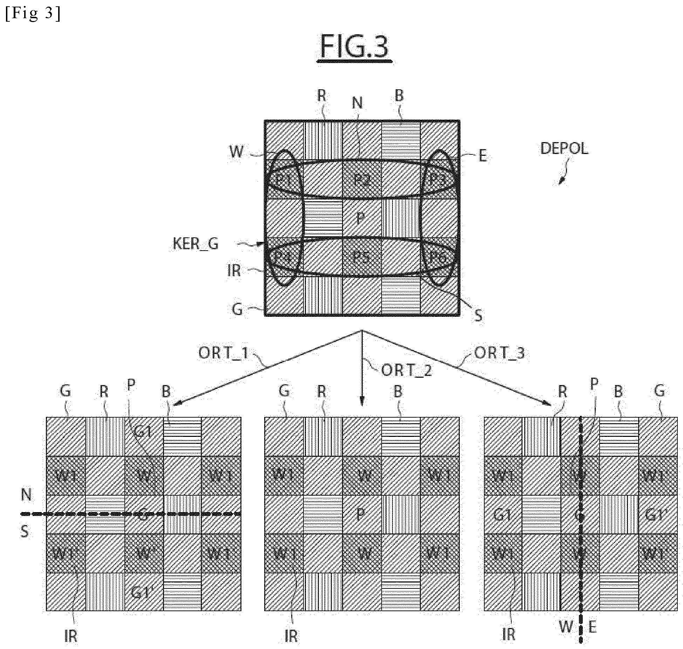

La figure 3, en relation avec les équations Eq.301 à Eq.338, illustre un exemple des calculs d'interpolation de la valeur de la composante interpolée de bruit infrarouge (ITP), au sein du groupe KER_G dans le cas où le pixel d'intérêt P a la composante originelle verte.

Dans les équations, les références telles que P1, P4, G1 expriment la valeur de la composante du pixel désigné par ladite référence.

Dans cet exemple, l'évaluation de l'uniformité spatiale comprend d'abord une identification d'une orientation de variation spatiale ORT_1, ORT_2, ORT_3 à partir d'une comparaison des composantes des pixels de références P1-P6 basée sur les équations Eq.301 et Eq.302. ${grad}_{EW} = \left|\left(P1+P4\right)-\left(P3+P6\right)\right|$ Eq.301 ${grad}_{NS} = \left|\left(P1+P2+P3\right)-\left(P4+P5+P6\right)\right|$ Eq.302

Si *grad_{NS} > grad_{EW}* alors une orientation de variation spatiale ORT_1 est identifiée dans une direction N-S (« Nord-Sud »), et le calcul des poids W1, W2, W3, W1', W2', W3' tel que défini par les équations Eq.311-Eq.319, utilise une sélection de pixel G, G1, G1' ayant la composante originelle verte, qui sont alignés avec le pixel d'intérêt P dans l'orientation N-S identifiée.

L'évaluation de l'uniformité spatiale de l'environnement des pixels de référence P1-P6, est définie par les équations Eq.311 et Eq.312. $grad = \left|G1-G\right|$ Eq.311 $grad ′ = \left|G1′-G\right|$ Eq.312

Le calcul des poids W, W', W1, W1' attribués aux pixels de référence P1-P6 à des valeurs normalisées et proportionnelles à l'uniformité spatiale respective est défini par les équations Eq.313 à Eq.318. $α = \frac{1 + grad}{1 + gra ′}$ Eq.313 $\left\{\begin{matrix}W 2 ′ = α ∗ W 2 \\ W 1 + W 2 + W 3 + W 1 ′ + W 2 ′ + W 3 ′ = 1 \\ W 1 = W 3 = 0.5 ∗ W 2 \\ W 1 ′ = W 3 ′ = 0.5 ∗ W 2 ′\end{matrix}\right.$ Eq.314

La résolution du système Eq.314 donne les différentes valeurs des poids attribués aux pixels de référence P1-P6 : $W = \frac{1}{2 \left(1+α\right)}$ Eq.315 $W ′ = \frac{α}{2 \left(1+α\right)}$ Eq.316 $W 1 = \frac{1}{4 \left(1+α\right)}$ Eq.317 $W 1 ′ = \frac{α}{4 \left(1+α\right)}$ Eq.318

Enfin, la composante interpolée (ITP) est obtenue par le calcul de la somme des composantes des pixels de références {*Pi*}_{1≤*i*≤6} pondérées par les poids respectifs {ω*i*}_{1≤*i*≤6}, tel que défini par l'équation Eq.319.

Eq.319 *ITP* = ∑*ᵢ Pi* * *ωi* avec {*ωi*}_{1≤*i*≤6} = {*ω*1 *= W*1; *ω*2 *= W*; *ω*3 *= W*1; *ω*4 = *W*1'; *ω*5 *= W'*; *ω*6 *= W*1'}, tels que représentés dans le cas ORT_1 par rapport aux Pi du noyau KER_G de la figure 3.

Si *grad_{NS} = grad_{EW}* alors une orientation de variation spatiale ORT_2 est identifiée dans aucune direction, et les valeurs des poids W1, W sont fixées arbitrairement de façon homogène tel que défini par les équations Eq.321-Eq.323. $W = 0 , 25$ Eq.321 $W 1 = 0 , 125$ Eq.322

Et, la composante interpolée (ITP) est obtenue par le calcul de la somme des composantes des pixels de références {*Pi*}_{1≤*i*≤6} pondérées par les poids respectifs {*ωi*}_{1≤*i*≤6}, tel que défini par l'équation Eq.323.

Eq.323 *ITP* = ∑*ᵢ Pi* * *ωi* avec {*ωi*}_{1≤*i*≤6} = {*ω*1 *= W*1; *ω*2 *= W*; *ω*3 *= W*1; *ω*4 *= W*1; *ω*5 *= W*; *ω*6 *= W*1}, tels que représentés dans le cas ORT_2 par rapport aux Pi du noyau KER_G de la figure 3.

Si *grad_{NS} < grad_{EW}* alors une orientation de variation spatiale ORT_3 est identifiée dans une direction W-E (« Ouest-Est »), et le calcul des poids W1, W2, W3, W1', W2', W3' tel que défini par les équations Eq.331-Eq.338, utilise une sélection de pixel G, G1, G1' ayant la composante originelle verte, qui sont alignés avec le pixel d'intérêt P dans l'orientation W-E identifiée.

L'évaluation de l'uniformité spatiale de l'environnement des pixels de référence P1-P6, est définie par les équations Eq.331 et Eq.332. $grad = \left|G1-G\right|$ Eq.331 $grad ′ = \left|G1′-G\right|$ Eq.332

Le calcul des poids attribués W1, W1', W aux pixels de référence P1-P6 à des valeurs normalisées et proportionnelles à l'uniformité spatiale respective est défini par les équations Eq.333 à Eq.337. $α = \frac{1 + grad}{1 + grad ′}$ Eq.333 $\left\{\begin{matrix}W 1 ′ = α ∗ W 1 \\ 2 W + 2 W 1 + 2 W 1 ′ = 1 \\ W = 0 , 25\end{matrix}\right.$ Eq.334

La résolution du système Eq.334 donne les différentes valeurs des poids attribués aux pixels de référence P1-P6 : $W 1 = \frac{1}{4 \left(1+α\right)}$ Eq.335 $W 1 ′ = \frac{α}{4 \left(1+α\right)}$ Eq.336 $W = 0 , 25$ Eq.337

Enfin, la composante interpolée (ITP) est obtenue par le calcul de la somme des composantes de pixels de références {*Pi*}_{1≤*i*≤6} pondérées par les poids respectifs {*ωi*}_{1≤*i*≤6}, tel que défini par l'équation Eq.338.

Eq.338 *ITP* = ∑*ᵢ Pi* * *ωi* avec {*ωi*}_{1≤*i*≤6} = {*ω*1 *= W*1; *ω*2 *= W*; *ω*3 *= W*1'; *ω*4 *= W*1; *ω*5 *= W*; *ω*6 *= W*1'}, tels que représentés dans le cas ORT_3 par rapport aux Pi du noyau KER_G de la figure 3.

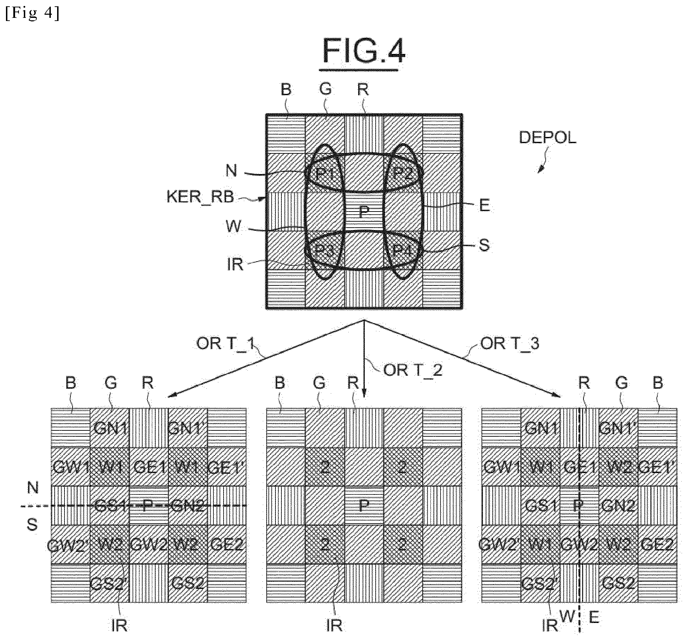

La figure 4, en relation avec les équations Eq.401 à Eq.436, illustre un exemple des calculs d'interpolation de la valeur de la composante interpolée de bruit infrarouge (ITP), au sein du groupe KER_RB dans le cas où le pixel d'intérêt P a la composante originelle bleue B.

Dans les équations, les références telles que P1, P4, GN1 expriment la valeur de la composante du pixel désigné par ladite référence.

Dans cet exemple, l'évaluation de l'uniformité spatiale comprend d'abord une identification d'une orientation de variation spatiale ORT_1, ORT_2, ORT_3 à partir d'une comparaison des composantes des pixels de références P1-P4 basée sur les équations Eq.401, Eq.402. ${grad}_{EW} = \left|\left(P1+P3\right)-\left(P2+P4\right)\right|$ Eq.401 ${grad}_{NS} = \left|\left(P1+P2\right)-\left(P3+P4\right)\right|$ Eq.402

Si *grad_{NS} > grad_{EW}* alors une orientation de variation spatiale ORT_1 est identifiée dans une direction N-S (« Nord-Sud »), et le calcul des poids W1, W2, tel que défini par les équations Eq.411-Eq.416, utilise une sélection de pixel GN1, GW1, GE1, GS1, GN1', GE1', GN2 et respectivement GN2, GW2, GE2, GS2, GS2', GW2', GS1 ayant la composante originelle verte, qui sont adjacents avec des pixels de références P1, P2, P3, P4.

L'évaluation de l'uniformité spatiale de l'environnement des pixels de référence P1-P4, est définie par les équations Eq.411 et Eq.412. $\begin{matrix}grad 1 = max \left(GN1;GS1;GE1;GW1\right) - \\ min \left(GN1;GS1;GE1;GW1\right) + max \left(GN1′;GN2;GE1;GE1′\right) - \\ min \left(GN1′;GN2;GE1;GE1′\right)\end{matrix}$ Eq.411 $\begin{matrix}grad 2 = max \left(GN2;GS2;GE2;GW2\right) - \\ min \left(GN2;GS2;GE2;GW2\right) + max \left(GS1;GS2′;GW2′;GW2\right) - \\ min \left(GS1;GS2′;GW2′;GW2\right)\end{matrix}$ Eq.412

Le calcul des poids W1, W2 attribués aux pixels de référence P1-P4 à des valeurs normalisées et proportionnelles à l'uniformité spatiale respective est défini par les équations Eq.413 à Eq.415. $α = \frac{1 + grad 1}{1 + gra}$ Eq.413 $W 1 = \frac{1}{2 \left(1+α\right)}$ Eq.414 $W 2 = \frac{α}{2 \left(1+α\right)}$ Eq.415

Enfin, la composante interpolée (ITP) est obtenue par le calcul de la somme des composantes de pixels de références {*Pi*}_{1≤*i*≤4} pondérées par les poids respectifs {*ωi*}_{1≤*i*≤4}, tel que défini par l'équation Eq.416.

Eq.416 *ITP* = ∑*ᵢ Pi* * *ωi* avec {*ωi*}_{1≤*i*≤4} = {*ω*1 *= W*1; *ω*2 *= W*1; *ω*3 *= W*2; *ω*4 *= W*2}, tels que représentés dans le cas ORT_1 par rapport aux Pi du noyau KER_RB de la figure 4.

Si *grad_{NS} = grad_{EW}* alors une orientation de variation spatiale ORT_2 est identifiée dans aucune direction, et les valeurs des poids sont fixées arbitrairement de façon homogène tel que défini par les équations Eq.421-Eq.422. $W = 0 , 25$ Eq.421

Et, la composante interpolée (ITP) est obtenue par le calcul de la somme des composantes de pixels de références {*Pi*}_{1≤*i*≤4} pondérées par les poids respectifs {*ωi*}_{1≤*i*≤4}, tel que défini par l'équation Eq.422.

Eq.422 *ITP* = *∑ᵢ Pi* * *ωi* avec {*ωi*}_{1≤*i*≤6} = {*ω*1 *= W*; *ω*2 *= W*; *ω*3 = *W*; *ω*4 *= W*;}, tels que représentés dans le cas ORT_2 par rapport aux Pi du noyau KER_RB de la figure 4.

Si *grad_{NS} < grad_{EW}* alors une orientation de variation spatiale ORT_3 est identifiée dans une direction W-E (« Ouest-Est »), et le calcul des poids W1, W2, tel que défini par les équations Eq.431-Eq.436, utilise une sélection de pixel GN1, GW1, GE1, GS1, GW2', GW2, GS2'et respectivement GN2, GW2, GE2, GS2, GN1', GE1', GE1 ayant la composante originelle verte, qui sont adjacents avec certains au moins des pixels de références P1, P2, P3, P4.

L'évaluation de l'uniformité spatiale de l'environnement des pixels de référence P1-P4 est définie par les équations Eq.431 et Eq.432. $\begin{matrix}grad 1 = max \left(GN1;GS1;GE1;GW1\right) - \\ min \left(GN1;GS1;GE1;GW1\right) + max \left(GS1;GS2′;GW2′;GW2\right) - \\ min \left(GS1;GS2′;GW2′;GW2\right)\end{matrix}$ Eq.431 $\begin{matrix}grad 2 = max \left(GN2;GS2;GE2;GW2\right) - \\ min \left(GN2;GS2;GE2;GW2\right) + max \left(GN1′;GE1′;GN2;GE1\right) - \\ min \left(GN1′;GE1′;GN2;GE1\right)\end{matrix}$ Eq.432

Le calcul des poids W1, W2 attribués aux pixels de référence P1-P4 à des valeurs normalisées et proportionnelles à l'uniformité spatiale respective est défini par les équations Eq.433 à Eq.435. $α = \frac{1 + grad 1}{1 + grad 2}$ Eq.433 $W 1 = \frac{1}{2 \left(1+α\right)}$ Eq.434 $W 2 = \frac{α}{2 \left(1+α\right)}$ Eq.435

Enfin, la composante interpolée (ITP) est obtenue par le calcul de la somme des composantes de pixels de références {*Pi*}_{1≤*i*≤4} pondérées par les poids respectifs {*ωi*}_{1≤*i*≤4}, tel que défini par l'équation Eq.436.

Eq.436 *ITP* = *∑ᵢ Pi* * *ωi* avec {*ωi*}_{1≤*i*≤4} = {*ω*1 *= W*1; *ω*2 *= W*2; *ω*3 *= W*1; *ω*4 *= W*2}, tels que représentés dans le cas ORT_3 par rapport aux Pi du noyau KER_RB de la figure 4.

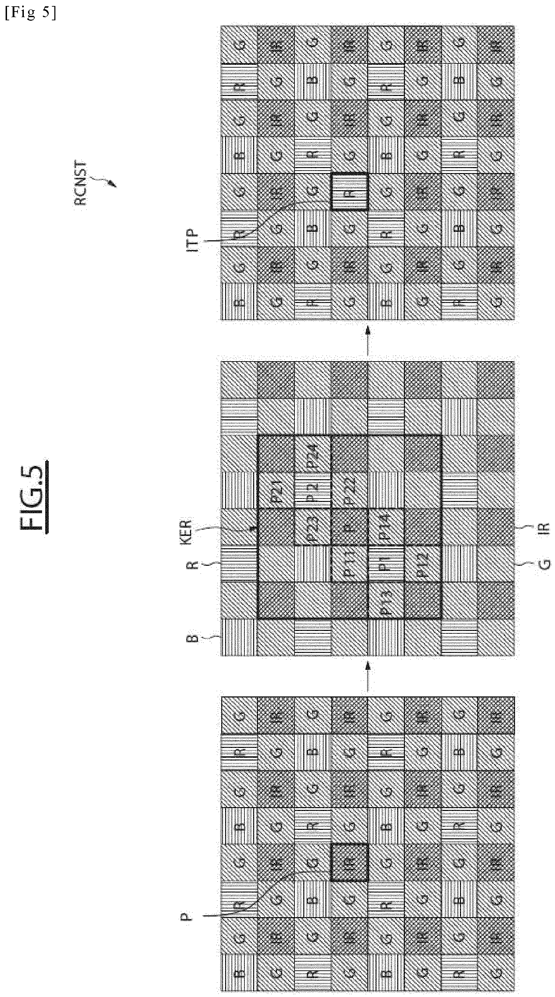

La figure 5 correspond avantageusement au traitement de reconstruction d'une composante du visible à la place d'une composante infrarouge RCNST dans lequel ladite interpolation est mise en œuvre de sorte que les composantes interpolées sont les composantes rouge R et bleue B, et les pixels d'intérêt P ont la composante originelle infrarouge IR. En conséquence, les pixels de référence ont les composantes originelles rouge R et, respectivement, bleue B.

Les équations Eq.501 à Eq.506 décrivent un exemple des calculs d'interpolation de la valeur de la composante interpolée rouge ou bleue, au sein du groupe KER dans le cas où le pixel d'intérêt P a la composante originelle infrarouge IR.

Dans les équations, les références telles que P1, P2, P11, expriment la valeur de la composante du pixel désigné par ladite référence.

Le cas illustré en relation avec la figure 5 correspond à la composante interpolée rouge R, les pixels de références P1, P2 étant les deux pixels ayant la composante originelle rouge R dans le noyau KER. La substitution des pixels rouges par les pixels bleus du noyau KER donne directement le cas où la composante interpolée est bleue.

L'évaluation de l'uniformité spatiale de l'environnement des pixels de référence P1, P2 est définie par les équations Eq.501 et Eq.502. $grad 1 = max \left(P11,P12,P13,P14\right) - min \left(P11,P12,P13,P14\right)$ Eq.501 $grad 2 = max \left(P21,P22,P23,P24\right) - min \left(P21,P22,P23,P24\right)$ Eq.502

Le calcul des poids *ω*1, *ω*2 attribués aux pixels de référence P1, P2 à des valeurs normalisées et proportionnelles à l'uniformité spatiale respective est défini par les équations Eq.503 à Eq.505. $α = \frac{1 + grad 2}{1 + grad 1}$ Eq.503 $ω 1 = \frac{α}{1 + α}$ Eq.504 $ω 2 = \frac{1}{1 + α}$ Eq.505

Enfin, la composante interpolée (ITP) est obtenue par le calcul de la somme des composantes de pixels de références {*Pi*}_{1≤*i*≤2} pondérées par les poids respectifs {*ωi*}_{1≤*i*≤2}, tel que défini par l'équation Eq.506. $ITP = {\sum }_{i} Pi ∗ ωi$ Eq.506

La figure 6 correspond avantageusement au traitement de formatage RBAYR d'une matrice de pixels dans le format de Bayer, dans lequel ladite interpolation est mise en œuvre de sorte que les composantes interpolées sont respectivement soit rouge R soit bleue B, les pixels d'intérêt P (représentés avec un remplissage blanc dans la figure 6) ont une composante originelle respectivement soit bleue B soit rouge R. En conséquence, les pixels de référence P1-P6 ont les composantes originelles respectivement soit rouge R soit bleue B.

Les équations Eq.601 à Eq.630 décrivent un exemple des calculs d'interpolation de la valeur de la composante interpolée rouge ou bleue, au sein du groupe KER dans le cas où le pixel d'intérêt P a la composante originelle bleue ou rouge.

Dans les équations, les références telles que P1, P6, GN2, expriment la valeur de la composante du pixel désigné par ladite référence.

Le cas illustré en relation avec la figure 6 correspond à la composante interpolée Bleue, les pixels de références P1-P6 étant les pixels ayant la composante originelle bleue B dans le noyau KER. La substitution des pixels rouges par les pixels bleus d'un noyau correspondant donne directement le cas où la composante interpolée est bleue.

L'évaluation de l'uniformité spatiale de l'environnement des pixels de référence P1-P4 est définie par les équations Eq.601 à Eq.606. $gradNS = \left|GN-GS\right|$ Eq.601 $gradEW = \left|GE-GW\right|$ Eq.602 $gradDiag 1 = \left|GN-GE\right|$ Eq.603 $gradDiag 2 = \left|GW-GS\right|$ Eq.604 $gradDiag 3 = \left|GN-GW\right|$ Eq.605 $gradDiag 4 = \left|GE-GS\right|$ Eq.606

Le calcul des poids WNormNS, WNormEW, WNormDiag attribués aux pixels de référence P1-P6 à des valeurs normalisées et proportionnelles à l'uniformité spatiale respective est défini par les équations Eq.611 à Eq.617. $InvGradNS = \frac{1}{1 + gradNS}$ Eq.611 $InvGradEW = \frac{1}{1 + gradEW}$ Eq.612 $InvGradDiag = \frac{1}{1 + Moy \left(gradDiag ;gradDiag2;gradDiag3;gradDiag4\right)} ,$ Eq.613 où Moy() est une fonction « moyenne » conventionnelle. $Sum = InvGradNS + InvGradEW + InvGradDiag$ Eq.614 ${WNorm}_{NS} = \frac{InvGradNS}{Sum}$ Eq.615 ${WNorm}_{EW} = \frac{InvGradEW}{Sum}$ Eq.616 ${WNorm}_{Diag} = \frac{InvGradDiag}{Sum}$ Eq.617

On définit en outre une composante moyenne dans l'orientation N-S « Nord-Sud » P_{NS}, une composante moyenne dans l'orientation E-W « Est-ouest » P_{EW} et une composante moyenne dans l'orientation diagonale P_{Diag}, par les équations Eq.621 à Eq.628 ${P}_{NS} = \frac{P 1 + P 6}{2}$ Eq.621 ${P}_{EW} = \frac{P 3 + P 4}{2}$ Eq.622

On évalue l'uniformité spatiale de l'environnement des pixels de référence P2, P5 pour la composante moyenne dans l'orientation diagonale P_{Diag} : $\begin{matrix}grad 1 = max \left(GN2,GS2,GE2,GW2\right) - \\ min \left(GN2,GS2,GE2,GW2\right)\end{matrix}$ Eq.623 $\begin{matrix}grad 2 = max \left(GN5,GS5,GE5,GW5\right) - \\ min \left(GN5,GS5,GE5,GW5\right)\end{matrix}$ Eq.624

On calcule les poids *ω*1, *ω*2 attribués aux pixels de référence P2, P5 pour la composante moyenne dans l'orientation diagonale P_{Diag} : $α = \frac{1 + grad 1}{1 + grad 2}$ Eq.625 $ω 1 = \frac{1}{1 + α}$ Eq.626 $ω 2 = \frac{α}{1 + α}$ Eq.627 ${P}_{Diag} = ω 1 ∗ P 2 + ω 2 ∗ P 5$ Eq.628

Enfin, la composante interpolée ITP est obtenue par le calcul de la somme des composantes moyenne dans les orientations respective P_{NS}, P_{EW}, P_{Diag} pondérées par les poids respectifs WNorm_{NS}, WNorm_{EW}, WNorm_{Diag}, tel que défini par l'équation Eq.630. 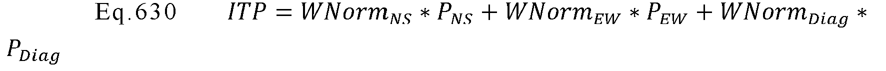 ITP = WNormNS * PNS + WNormEW * PEW + WNormDiag * PDiag Eq.630

Les exemples de réalisation et de mise en œuvre décrits ci-avant proposent ainsi une technique d'interpolation adaptée à trois types de traitements d'image, adaptés pour traiter une image du type matrice RGB-IR en entrée d'une unité de traitement d'image ISP. La technique d'interpolation prend en compte les variations de textures et de bords dans l'image au moyen d'une évaluation de l'uniformité spatiale des pixels de référence. Les poids attribués aux pixels de références sont ajustés en fonction de l'uniformité spatiale évaluée pour les pixels respectifs. L'ajustement des poids est fait de telle sorte que les poids les plus forts sont donnés aux pixels situés dans les zones les plus « plates » c'est-à-dire les plus uniformes. Cela permet d'affiner la qualité de l'image et conduit à une reproduction plus fidèle.

Des exemples de calculs de principe ont été donnés à cet égard, cela étant, l'invention n'est pas limitée à ces exemples de réalisation, de mise en œuvre et de calculs, mais en embrasse toutes les variantes, par exemple on pourra prévoir d'affiner les calculs par l'usage de moyens conventionnels, par exemple de proportionner la quantité de bruit infrarouge à soustraire dans le mécanisme de dépollution, par le rapport entre l'énergie accumulée sur la bande infrarouge par le pixel de couleur à dépolluer et l'énergie accumulée sur tout le spectre (visible et infrarouge) accumulée par le pixel infrarouge, on pourra par ailleurs dimensionner différemment la taille du noyau « KER » en fonction du type de motif élémentaire de la matrice traitée.

## Revendications

1. Procédé de traitement, au sein d'une chaine de traitement d'image (CHT) destinée à être connectée à un imageur (IMG), d'une matrice de pixels (RGBIR_RAW) contenant chacun une composante originelle rouge (R), verte (G), bleue (B), ou infrarouge (IR), le procédé comprenant au moins une interpolation d'une composante interpolée (R) différente de la composante originelle (IR) d'un pixel d'intérêt (P) à partir des composantes d'un groupe (KER) de pixels voisins du pixel d'intérêt (P), l'interpolation comprenant :
- un calcul de la somme des composantes de pixels de référence (P1, P2) pondérées par un poids respectivement attribué, les pixels de référence (P1, P2) étant des pixels du groupe (KER) ayant la même composante originelle (R) que la composante interpolée (R),
- une évaluation d'une uniformité spatiale d'un environnement (P11, ..., P14 ; P21, ..., P24), au sein du groupe (KER), de chaque pixel de référence (P1, P2),
- un calcul des poids attribués aux pixels de référence (P1, P2) à des valeurs normalisées et proportionnelles à l'uniformité spatiale respective,
le procédé étant **caractérisé en ce que** l'évaluation d'une uniformité spatiale de chaque pixel de référence (P1, P2) comprend un calcul de gradients sur les composantes des pixels (P11, ..., P14 ; P21, ..., P24) ayant la composante originelle verte adjacents aux pixels de référence respectifs (P1, P2) et
ladite interpolation est mise en œuvre :
- dans un traitement de dépollution (DEPOL) d'un bruit infrarouge des pixels, la composante interpolée étant la composante infrarouge (IR), les pixels d'intérêt (P) ayant les composantes originelles rouge (R), verte (G), et bleue (B), et/ou
- dans un traitement de reconstruction (RCNST) d'une composante du visible à la place d'une composante infrarouge (IR), les composantes interpolées étant les composantes rouge (R) et bleue (B), les pixels d'intérêt (P) ayant la composante originelles infrarouge (IR), et/ou
- dans un traitement de formatage (RBAYR) de la matrice de pixel (RGB_RCNST) en une matrice de Bayer (RGB_BAYR), les composantes interpolées étant respectivement soit rouge (R) soit bleue (B), les pixels d'intérêt (P) ayant une composante originelle respectivement soit bleue (B) soit rouge (R).

2. Procédé selon la revendication 1, dans lequel le calcul des gradients comprend une mesure de la différence absolue entre la plus grande valeur et la plus petite valeur des composantes desdits pixels (P11, ..., P14 ; P21, ..., P24) ayant la composante originelle verte adjacents auxdits pixels de référence (P1, P2).

3. Procédé selon l'une des revendications 1 ou 2, dans lequel l'évaluation de l'uniformité spatiale comprend une identification d'une orientation de variation spatiale (ORT_1, ORT_2, ORT_3) à partir d'une comparaison des composantes des pixels de références (P1, ..., P6), et une sélection desdits pixels (G, G1, G1') ayant la composante originelle verte utilisés pour le calcul des gradients, dans l'orientation identifiée.

4. Procédé selon l'une des revendications précédentes, dans lequel le groupe (KER) de pixels voisins du pixel d'intérêt (P) comprend un ensemble de pixels appartenant à un carré de pixels ayant un nombre impair de pixels sur chaque côté, le pixel d'intérêt (P) étant situé au centre du carré.

5. Procédé selon l'une des revendications précédentes, dans lequel une matrice de pixels (RGBIR_RAW) est délivrée à la chaine de traitement (CHT) par l'imageur (IMG) selon un motif élémentaire du type « RGB-IR 4x4 » comportant deux pixels rouges (R), huit pixels verts (G), deux pixels bleus (B), et quatre pixels infrarouges (IR), agencés de sorte que chaque pixel rouge (R), bleu (B) et infrarouge (IR) ne soit adjacent qu'à des pixels verts (G).

6. Dispositif électronique (DIS) comportant une chaine de traitement d'image (CHT) destinée à être connectée à un imageur (IMG), et configurée pour effectuer un traitement sur une matrice de pixels (RGBIR_RAW) contenant chacun une composante originelle rouge (R), verte (G), bleue (B), ou infrarouge (IR), le traitement comprenant au moins une interpolation d'une composante interpolée (R) différente de la composante originelle (IR) d'un pixel d'intérêt (P) à partir des composantes d'un groupe (KER) de pixels voisins du pixel d'intérêt (P), dans lequel pour mettre en œuvre l'interpolation, la chaine de traitement (CHT) est configurée pour :
- calculer la somme des composantes de pixels de références (P1, P2) pondérées par un poids respectivement attribué, les pixels de référence (P1, P2) étant des pixels du groupe (KER) ayant la même composante originelle (R) que la composante interpolée (R),
- évaluer une uniformité spatiale d'un environnement (P11, ..., P14 ; P21, ..., P24), au sein du groupe (KER), de chaque pixel de référence (P1, P2),
- calculer les poids attribués aux pixels de référence (P1, P2) à des valeurs normalisées et proportionnelles à l'uniformité spatiale respective,
le dispositif étant **caractérisé en ce que** pour évaluer l'uniformité spatiale de chaque pixel de référence la chaine de traitement (CHT) est configurée en outre pour calculer des gradients sur les composantes des pixels (P11, ..., P14 ; P21, ..., P24) ayant la composante originelle verte adjacents aux pixels de référence respectifs (P1, P2), et
la chaine de traitement (CHT) comporte :
- un moyen de traitement de dépollution (DEPOL) d'un bruit infrarouge des pixels configuré pour mettre en œuvre ladite interpolation de sorte que la composante interpolée est la composante infrarouge (IR), et les pixels d'intérêt (P) ont les composantes originelles rouge (R), verte (G), et bleue (B), et/ou
- un moyen de traitement de reconstruction (RCNST) d'une composante du visible à la place d'une composante infrarouge, configuré pour mettre en œuvre ladite interpolation de sorte que les composantes interpolées sont les composantes rouge (R) et bleue (B), et les pixels d'intérêt (P) ont la composante originelle infrarouge (IR), et/ou
- un moyen de traitement de formatage (RBAYR) de la matrice de pixel (RGB_RCNST) en une matrice de Bayer (RGB_BAYR), configuré pour mettre en œuvre ladite interpolation de sorte que les composantes interpolées sont respectivement soit rouge (R) soit bleue (B), et les pixels d'intérêt (P) ont une composante originelle respectivement soit bleue (B) soit rouge (R).

7. Dispositif selon la revendication 6, dans lequel la chaine de traitement (CHT) est configurée pour calculer les gradients en mesurant la différence absolue entre la plus grande valeur et la plus petite valeur des composantes desdits pixels (P11, ..., P14 ; P21, ..., P24) ayant la composante originelle verte adjacents auxdits pixels de référence (P1, P2).

8. Dispositif électronique selon l'une des revendications 6 ou 7, dans lequel, pour évaluer l'uniformité spatiale de chaque pixel de référence (P1, ..., P6), la chaine de traitement (CHT) est configurée pour comparer des composantes des pixels de références (P1, ..., P6) et identifier une orientation de variation spatiale (ORT_1, ORT_2, ORT_3) à partir de la comparaison, et pour sélectionner lesdits pixels (G, G1, G1') ayant la composante originelle verte utilisés pour le calcul des gradients, dans l'orientation identifiée.

9. Dispositif électronique selon l'une des revendications 6 ou 8, dans lequel le groupe de pixels (KER) voisins du pixel d'intérêt comprend un ensemble de pixels appartenant à un carré de pixels ayant un nombre impair de pixels sur chaque côté, le pixel d'intérêt (P) étant situé au centre du carré.

10. Dispositif électronique selon l'une des revendications 6 à 9, dans lequel la chaine de traitement (CHT) est configurée pour traiter une matrice de pixels (RGBIR_RAW) selon un motif élémentaire du type « RGB-IR 4x4 » comportant deux pixels rouges (R), huit pixels verts (G), deux pixels bleus (B), et quatre pixels infrarouges (IR), agencés de sorte que chaque pixel rouge (R), bleu (B) et infrarouge (IR) ne soit adjacent qu'à des pixels verts (G).

## Patentansprüche

1. Verarbeitungsverfahren innerhalb einer Bildverarbeitungskette (CHT), die dazu bestimmt ist, mit einem Bildgeber (IMG) verbunden zu werden, einer Matrix von Pixeln (RGBIR_RAW), die jeweils eine ursprüngliche rote (R), grüne (G), blaue (B) oder infrarote (IR) Komponente enthalten, wobei das Verfahren mindestens eine Interpolation einer interpolierten Komponente (R), die sich von der ursprünglichen Komponente (IR) eines Pixels von Interesse (P) unterscheidet, aus den Komponenten einer Gruppe (KER) von Pixeln, die dem Pixel von Interesse (P) benachbart sind, umfasst, wobei die Interpolation umfasst:
- eine Berechnung der Summe der durch ein jeweils zugewiesenes Gewicht gewichteten Komponenten von Referenzpixeln (P1, P2), wobei die Referenzpixel (P1, P2) Pixel der Gruppe (KER) mit derselben ursprünglichen Komponente (R) wie die interpolierte Komponente (R) sind,
- eine Bewertung der räumlichen Gleichmäßigkeit einer Umgebung (P11, ..., P14; P21, ..., P24) innerhalb der Gruppe (KER) jedes Referenzpixels (P1, P2),
- eine Berechnung der den Referenzpixeln (P1, P2) zugewiesenen Gewichte mit normalisierten Werten, die proportional zu der jeweiligen räumlichen Gleichförmigkeit sind,
wobei das Verfahren **dadurch gekennzeichnet ist, dass** die Bewertung einer räumlichen Gleichmäßigkeit jedes Referenzpixels (P1, P2) eine Berechnung von Gradienten auf den Komponenten der Pixel (P11, ..., P14; P21, ..., P24) mit der ursprünglichen grünen Komponente umfasst, die an die jeweiligen Referenzpixel (P1, P2) angrenzen, und die Interpolation durchgeführt wird:
- in einer Depollutions-Verarbeitung (DEPOL) eines Infrarotrauschens der Pixel, wobei die interpolierte Komponente die Infrarotkomponente (IR) ist, wobei die Pixel von Interesse (P) die ursprünglichen Komponenten rot (R), grün (G) und blau (B) aufweisen, und/ oder
- in einer Rekonstruktions-Verarbeitung (RCNST) einer Komponente des Sichtbaren anstelle einer Infrarotkomponente (IR), wobei die interpolierten Komponenten die Komponenten rot (R) und blau (B) sind, wobei die Pixel von Interesse (P) die ursprüngliche Infrarotkomponente (IR) aufweisen, und/ oder
- in einer Formatierungs-Verarbeitung (RBAYR) der Pixelmatrix (RGB_RCNST) zu einer Bayer-Matrix (RGB_BAYR), wobei die interpolierten Komponenten entweder rot (R) oder blau (B) sind, wobei die Pixel von Interesse (P) eine entweder blaue (B) oder rote (R) ursprüngliche Komponente aufweisen.

2. Verfahren nach Anspruch 1, wobei die Berechnung der Gradienten eine Messung der absoluten Differenz zwischen dem größten und dem kleinsten Wert der Komponenten der Pixel (P11, ..., P14; P21, ..., P24) mit der ursprünglichen grünen Komponente neben den Referenzpixeln (P1, P2) umfasst.

3. Verfahren nach einem der Ansprüche 1 oder 2, wobei die Bewertung der räumlichen Gleichförmigkeit eine Identifizierung einer räumlichen Variationsausrichtung (ORT_1, ORT_2, ORT_3) aus einem Vergleich der Komponenten der Referenzpixel (P1, ..., P6) und eine Auswahl der Pixel (G, G1, G1') mit der ursprünglichen grünen Komponente, die für die Berechnung der Gradienten in der identifizierten Ausrichtung verwendet werden, umfasst.

4. Verfahren nach einem der vorhergehenden Ansprüche, wobei die Gruppe (KER) von Pixeln, die dem interessierenden Pixel (P) benachbart sind, einen Satz von Pixeln umfasst, die zu einem Quadrat von Pixeln gehören, das auf jeder Seite eine ungerade Anzahl von Pixeln aufweist, wobei sich das interessierende Pixel (P) in der Mitte des Quadrats befindet.

5. Verfahren nach einem der vorhergehenden Ansprüche, wobei eine Pixelmatrix (RGBIR_RAW) von dem Bildgeber (IMG) nach einem elementaren Muster des Typs "RGB-IR 4x4", das zwei rote (R), acht grüne (G), zwei blaue (B) und vier Infrarot (IR)-Pixel aufweist, an die Verarbeitungskette (CHT) abgegeben wird, die so angeordnet sind, dass jedes rote (R), blaue (B) und Infrarot (IR)-Pixel nur neben grünen (G) Pixeln liegt.

6. Elektronische Vorrichtung (DIS), die eine Bildverarbeitungskette (CHT) aufweist, die dazu bestimmt ist, mit einem Bildgeber (IMG) verbunden zu werden, und eingerichtet ist, um eine Verarbeitung auf einer Pixelmatrix (RGBIR_RAW) durchzuführen, die jeweils eine ursprüngliche rote (R), grüne (G), blaue (B) oder infrarote (IR) Komponente enthält, wobei die Verarbeitung mindestens eine Interpolation einer interpolierten Komponente (R) umfasst, die sich von der ursprünglichen Komponente (IR) eines interessierenden Pixels (P) aus den Komponenten einer Gruppe (KER) von Pixeln unterscheidet, die dem interessierenden Pixel (P) benachbart sind, wobei zur Umsetzung der Interpolation die Verarbeitungskette (CHT) für Folgendes eingerichtet ist:
- Berechnen der Summe der durch ein jeweils zugewiesenes Gewicht gewichteten Komponenten von Referenzpixeln (P1, P2), wobei die Referenzpixel (P1, P2) Pixel der Gruppe (KER) mit derselben ursprünglichen Komponente (R) wie die interpolierte Komponente (R) sind,
- Bewerten der räumlichen Gleichmäßigkeit einer Umgebung (P11, ..., P14; P21, ..., P24) innerhalb der Gruppe (KER) jedes Referenzpixels (P1, P2),
- Berechnen der den Referenzpixeln (P1, P2) zugewiesenen Gewichte mit normalisierten Werten, die proportional zu der jeweiligen räumlichen Gleichförmigkeit sind,
wobei die Vorrichtung **dadurch gekennzeichnet ist, dass** zur Bewertung der räumlichen Gleichförmigkeit jedes Referenzpixels die Verarbeitungskette (CHT) ferner so eingerichtet ist, dass sie Gradienten auf den Komponenten der Pixel (P11, ..., P14; P21, ..., P24) mit der ursprünglichen grünen Komponente neben den Referenzpixeln (P1, P2) umfasst, und
die Verarbeitungskette (CHT) aufweist:
- ein Mittel zur Depollutions-Verarbeitung (DEPOL) eines Infrarotrauschens der Pixel, das so eingerichtet ist, dass die Interpolation so durchgeführt wird, dass die interpolierte Komponente die Infrarotkomponente (IR) ist und die Pixl von Interesse (P) die ursprünglichen Komponenten rot (R), grün (G) und blau (B) aufweisen, und/ oder
- ein Mittel zur Rekonstruktions-Verarbeitung (RCNST) einer Komponente des Sichtbaren anstelle einer Infrarotkomponente, das so eingerichtet ist, dass die Interpolation so durchgeführt wird, dass die interpolierten Komponenten die Komponenten rot (R) und blau (B) sind und die Pixel von Interesse (P) die ursprüngliche Infrarotkomponente (IR) aufweisen, und/ oder
- ein Mittel zur Formatierungs-Verarbeitung (RBAYR) der Pixelmatrix (RGB_RCNST) zu einer Bayer-Matrix (RGB_BAYR), das so eingerichtet ist, dass die Interpolation so durchgeführt wird, dass die interpolierten Komponenten entweder rot (R) oder blau (B) sind und die Pixel von Interesse (P) eine entweder blaue (B) oder rote (R) ursprüngliche Komponente aufweisen.

7. Vorrichtung nach Anspruch 6, wobei die Verarbeitungskette (CHT) so eingerichtet ist, dass sie die Gradienten berechnet, indem die absolute Differenz zwischen dem größten und dem kleinsten Wert der Komponenten der Pixel (P11, ..., P14; P21, ..., P24) gemessen wird, die die ursprüngliche grüne Komponente neben den Referenzpixeln (P1, P2) aufweisen.

8. Elektronische Vorrichtung nach einem der Ansprüche 6 oder 7, wobei zur Beurteilung der räumlichen Gleichmäßigkeit jedes Referenzpixels (P1, ..., P6) die Verarbeitungskette (CHT) so eingerichtet ist, dass sie Komponenten der Referenzpixel (P1, ..., P6) vergleicht und eine räumliche Variationsausrichtung (ORT_1, ORT_2, ORT_3) aus dem Vergleich identifiziert und die Pixel (G, G1, G1') auswählt, die die ursprüngliche grüne Komponente aufweisen, die für die Berechnung der Gradienten in der identifizierten Ausrichtung verwendet werden.

9. Elektronische Vorrichtung nach einem der Ansprüche 6 oder 8, wobei die dem Pixel von Interesse benachbarte Gruppe von Pixeln (KER) einen Satz von Pixeln umfasst, die zu einem Pixelquadrat gehören, das auf jeder Seite eine ungerade Anzahl von Pixeln aufweist, wobei sich das Pixel von Interesse (P) in der Mitte des Quadrats befindet.

10. Elektronische Vorrichtung nach einem der Ansprüche 6 bis 9, wobei die Verarbeitungskette (CHT) so eingerichtet ist, dass sie eine Pixelmatrix (RGBIR_RAW) nach einem elementaren Muster des Typs "RGB-IR 4x4", das zwei rote (R), acht grüne (G), zwei blaue (B) und vier Infrarot (IR)-Pixel aufweist, verarbeitet, die so angeordnet sind, dass jedes rote (R), blaue (B) und Infrarot (IR)-Pixel nur neben grünen (G) Pixeln liegt.

## Claims

1. Method for processing an array of pixels (RGBIR_RAW) within an image processing chain (CHT) intended to be connected to an imager (IMG), each pixel containing a red (R), green (G), blue (B) or infrared (IR) original component, the method comprising at least one interpolation of an interpolated component (R) different from the original component (IR) of a pixel of interest (P) based on the components of a group (KER) of pixels next to the pixel of interest (P), the interpolation comprising:
- calculating the sum of the components of reference pixels (P1, P2) weighted by a respectively assigned weight, the reference pixels (P1, P2) being pixels of the group (KER) having the same original component (R) as the interpolated component (R),
- evaluating a spatial uniformity of an environment (P11, ..., P14; P21, ..., P24) of each reference pixel (P1, P2) within the group (KER),
- calculating the weights assigned to the reference pixels (P1, P2) with normalised values proportional to the respective spatial uniformity,
the method being **characterised in that** the evaluation of a spatial uniformity of each reference pixel (P1, P2) comprises calculating gradients over the components of the pixels (P11, ..., P14; P21, ..., P24) having the green original component that are adjacent to the respective reference pixels (P1, P2), and said interpolation is implemented:
- in a processing (DEPOL) to depollute an infrared noise of the pixels, the interpolated component being the infrared component (IR), the pixels of interest (P) having the red (R), green (G) and blue (B) original components, and/or
- in processing (RCNST) to reconstruct a visible component instead of an infrared (IR) component, the interpolated components being the red (R) and blue (B) components, the pixels of interest (P) having the infrared (IR) original component, and/or
- in a processing (RBAYR) to format the array of pixels (RGB_RCNST) as a Bayer array (RGB_BAYR), the interpolated components respectively being either red (R) or blue (B), the pixels of interest (P) respectively having either a blue (B) or red (R) original component.

2. Method according to claim 1, wherein the calculation of the gradients comprises measuring the absolute difference between the largest value and the smallest value of the components of said pixels (P11, ..., P14; P21, ..., P24) having the green original component that are adjacent to said reference pixels (P1, P2).

3. Method according to one of claims 1 or 2, wherein the spatial uniformity evaluation comprises identifying a spatial variation orientation (ORT_1, ORT_2, ORT_3) based on a comparison of the components of the reference pixels (P1, ..., P6) and selecting said pixels (G, G1, G1') having the green original component that are used for calculating the gradients in the identified orientation.

4. Method according to one of the preceding claims, wherein the group (KER) of pixels next to the pixel of interest (P) comprises a set of pixels belonging to a square of pixels having an odd number of pixels on each side, the pixel of interest (P) being located at the centre of the square.

5. Method according to one of the preceding claims, wherein an array of pixels (RGBIR_RAW) is delivered to the processing chain (CHT) by the imager (IMG) according to an elementary pattern of the "RGB-IR 4x4" type comprising two red pixels (R), eight green pixels (G), two blue pixels (B) and four infrared pixels (IR), which are arranged so that each red (R), blue (B) and infrared (IR) pixel is adjacent only to green pixels (G).

6. Electronic device (DIS) comprising an image processing chain (CHT) which is intended to be connected to an imager (IMG) and is configured to carry out processing on an array of pixels (RGBIR_RAW), each pixel containing a red (R), green (G), blue (B), or infrared (IR) original component, the processing comprising at least one interpolation of an interpolated component (R) different from the original component (IR) of a pixel of interest (P) based on the components of a group (KER) of pixels next to the pixel of interest (P), wherein in order to implement the interpolation the processing chain (CHT) is configured to:
- calculate the sum of the components of reference pixels (P1, P2) weighted by a respectively assigned weight, the reference pixels (P1, P2) being pixels of the group (KER) having the same original component (R) as the interpolated component (R),
- evaluate a spatial uniformity of an environment (P11, P14; P21, ..., P24) of each reference pixel (P1, P2) within the group (KER),
- calculate the weights assigned to the reference pixels (P1, P2) with normalised values proportional to the respective spatial uniformity,
the device being **characterised in that** in order to evaluate the spatial uniformity of each reference pixel, the processing chain (CHT) is further configured to calculate gradients over the components of the pixels (P11, ..., P14; P21, ..., P24) having the green original component that are adjacent to the respective reference pixels (P1, P2), and
the processing chain (CHT) comprises:
- a processing means (DEPOL) for depolluting an infrared noise of the pixels, which is configured to implement said interpolation so that the interpolated component is the infrared component (IR) and the pixels of interest (P) have the red (R), green (G) and blue (B) original components, and/or
- a processing means (RCNST) for reconstructing a visible component instead of an infrared component, which is configured to implement said interpolation so that the interpolated components are the red (R) and blue (B) components and the pixels of interest (P) have the infrared (IR) original component, and/or
- a processing means (RBAYR) for formatting the array of pixels (RGB_RCNST) as a Bayer array (RGB_BAYR), which is configured to implement said interpolation so that the interpolated components are respectively either red (R) or blue (B) and the pixels of interest (P) respectively have either a blue (B) or red (R) original component.

7. Device according to claim 6, wherein the processing chain (CHT) is configured to calculate the gradients by measuring the absolute difference between the largest value and the smallest value of the components of said pixels (P11, ..., P14; P21, ..., P24) having the green original component that are adjacent to said reference pixels (P1, P2).

8. Electronic device according to one of claims 6 or 7, wherein in order to evaluate the spatial uniformity of each reference pixel (P1, ..., P6), the processing chain (CHT) is configured to compare components of the reference pixels (P1, ..., P6) and identify a spatial variation orientation (ORT_1, ORT_2, ORT_3) based on the comparison, and to select said pixels (G, G1, G1') having the green original component that are used for calculating the gradients in the identified orientation.

9. Electronic device according to one of claims 6 or 8, wherein the group of pixels (KER) next to the pixel of interest comprises a set of pixels belonging to a square of pixels having an odd number of pixels on each side, the pixel of interest (P) being located at the centre of the square.

10. Electronic device according to one of claims 6 to 9, wherein the processing chain (CHT) is configured to process an array of pixels (RGBIR_RAW) according to an elementary pattern of the "RGB-IR 4x4" type comprising two red pixels (R), eight green pixels (G), two blue pixels (B), and four infrared pixels (IR), which are arranged so that each red (R), blue (B) and infrared (IR) pixel is only adjacent to green pixels (G).
